# EUROPEAN PATENT SPECIFICATION

(11) **EP 2 520 837 B1**
(45) Date of publication and mention of the grant of the patent: **26.09.2018**
(21) Application number: 11382127.6
(22) Date of filing: 05.05.2011
(51) Int. Cl.: F16K 17/38, F16K 31/08

(54) **FIRE SAFETY VALVE**
FEUERSCHUTZVENTIL
SOUPAPE DE SURETE EN CAS D'INCENDIE

(43) Date of publication of application: 07.11.2012
(73) Proprietor: Air Products and Chemicals, Inc., Allentown, PA 18195-1501 (US)
(72) Inventor: Prat Rubio, José Pablo, 28703, San Sebastian de los Reyes (ES); Matarranz Martinez, Ricardo, 28703, San Sebastian de los Reyes (ES)
(74) Representative: Beck Greener

(56) References cited:
- CA-A1- 2 170 334
- US-A- 3 850 189
- US-A- 3 862 641

## Description

The present invention relates to a valve for closing the flow path of a gas that is combustible or capable of supporting combustion in the event of a fire. In certain embodiments, the invention relates particularly to a valve for closing the flow path of oxygen in an oxygen administration apparatus. The present invention further relates to an oxygen administration apparatus incorporating the valve.

Chronic obstructive pulmonary disease (COPD) constitutes the most homogeneous and largest group of patients with hypoxia. Treatment of COPD patients is based on the oxygen administration during exacerbation only, and/or long term oxygen treatment (LTOT). LTOT lengthens the lifetime and improves the quality of life of the COPD patients. This therapy is usually received by the COPD patient at home when the state of the disease is stable, typically for up to 15 hours per day, such as 10 or 12 hours per day.

Oxygen is delivered to the patient by flexible plastic tubing and an interface such as nasal prongs, a face mask or an endotracheal tube. Different oxygen sources can be used to supply the gas to patients, such as stationary or portable/transportable oxygen concentrators, cylinders of compressed oxygen in the gaseous state, or a Dewar containing liquid oxygen.

There is a risk of fire in the domestic environment when the outlet of the interface for supplying the oxygen is exposed to an ignition source. Such ignition sources might be, for example, candles, electrical sockets or switches, ignitions for gas appliances, or heaters. Particularly problematic sources are cigarettes, matches, lighters or other smoking paraphernalia where the patient, members of the patient's household, or visitors smoke. It is therefore necessary to provide a safety valve that cuts off the oxygen flow in the event of fire occurring as a result of material igniting in the vicinity of the oxygen source. Further, the fire should be slowed in its progression, and preferably prevented from progressing, along the oxygen line where the tubing or interface delivering the oxygen itself catches fire. This is especially important as the patient is likely to be close to the fire and possibly also to the oxygen source. In certain cases, the oxygen source may be distant from the patient, for example in a different room of the patient's house, and so in this circumstance it is particularly important to prevent the spread of fire around a building that can be caused by a fire anywhere along the tubing that conveys the oxygen from the source to the delivery interface.

Of course, it will be appreciated that there are other applications in which the use of a safety valve to cut off the supply of a combustible gas or a gas capable of supporting combustion in the event of fire will be necessary or advantageous. For example, a safety valve may be used to close the flow of a combustible gas in the supply flow path for apparatus such as blowtorches or soldering irons, or for gas ovens, heaters or barbecues.

When designing a safety valve for such applications, it is preferred that it should have certain properties. The valve should have a very low failure rate as the failure of the valve could potentially have fatal consequences. The valve should be robust in order that it can withstand the ranges of temperatures normally found in the domestic environment and the impacts and mechanical forces it may be subjected to during use. Where the valve is for use in delivery of a fluid to a patient, the valve should not interfere in the normal use of the apparatus by the patient. The valve should also be lightweight in order to avoid discomfort to the patient if it is fitted close to a face mask or nasal prongs.

Further, the valve may be disposable. As the tubes and apparatus that deliver the oxygen from the oxygen source to the patient are disposable also to prevent the spread of infection, it would be appropriate for the valve to be likewise disposable. Accordingly, the valve should be easily and cheaply manufactured.

Various safety valves are known in the prior art.

WO2006/021775 discloses an oxygen administration apparatus comprising a safety valve that shuts off the supply of oxygen in the event of a fire. The described valve comprises a hollow shuttle carrying a sealing member at a proximal end, which is biased by a spring in a valve closing direction, and which is prevented from moving in a valve closing direction by its distal end abutting a fusible stop. In the event of a fire, the fusible stop melts and allows the spring to move the shuttle to close the valve. The shuttle and the body of the valve are preferably made from aluminium or an aluminium alloy, and the fusible stop of a low melting point plastics such as a polyamide.

GB2317941 discloses a safety shut-off valve for use in a gas meter to prevent gas flow in the event that the meter is damaged by fire. The valve is constructed from sheet steel, and comprises a closure member in the form of a hollow ball, which has a tubular extension that abuts a low-melting point alloy stop, and which is urged into contact with the stop by a coil spring bearing against the ball-shaped portion of the member. In the event of a fire, the alloy stop melts and the closure member is urged by the spring into sealing engagement with a valve seat.

WO2008/075035 discloses apparatus for use in delivery of gas capable of combustion that incorporates a safety valve unit. The safety valve unit closes the flow path of the gas from the source upon occurrence of a fire. The safety valve unit has a valve body, a valve head resiliently biased towards a valve-closure position by a spring, and a fusible retainer that holds the valve member in a valve open position by means of an elongate link member of which one end engages the fusible retainer and the other maintains the spring in compression such that the valve is open. A rise in temperature causes the fusible retainer to release the elongate link member, which in turn permits the spring to extend and to cause the valve to close by sealing engagement of a surface of the elongate link member with a part of the valve body.

US5927312 discloses a self-extinguishing conduit for conveying a gas capable of supporting combustion of the conduit interior, the conduit comprising combustible tubing and a flow occluder operatively associated with the combustible tubing, the flow occluder being actuated by the heat of combustion within the combustible tubing to substantially halt the flow of gas through the combustible tubing, and an assembly for delivering oxygen including the self-extinguishing conduit. The flow occluder may be either a band that is placed around the combustible tubing, and that constricts the tubing on exposure to high temperatures to prevent oxygen flow through the tubing, or may be a material lining the combustible tubing that expands on exposure to high temperatures to block the flow of gas through the tubing.

EP2133113 discloses an oxygen administration apparatus comprising a source of oxygen, an oxygen administration device, a length of flexible tubing for conducting oxygen from the source to the administration device, a first connection of a first end of the tubing to the oxygen source, the first connection being made through a first firebreak, and a second connection of a second end of the length of tubing to the oxygen administration device, the second connection being made through a second firebreak, wherein both firebreaks take the form of a safety valve as described in WO2006/021775.

Further safety valves are known from US 3 862 641 A and US 3 850 189 A. These prior art valves, where they include valves biased towards a closed position but maintained in an open position until a heat-actuated device allows closure, use a spring to bias the valve.

The aims of certain embodiments of the present invention include the provision of a safety valve, a firebreaker, and an oxygen line comprising at least one safety valve or firebreaker, in which the valve is disposable, and/or the valve has improved reliability over the long term compared with prior art valves, and/or the valve is simple to assemble, and/or the valve is inexpensive to manufacture.

In a first aspect of the invention there is provided a safety valve for closing, in response to a temperature increase, a flow path of a fluid, which fluid is combustible or capable of supporting combustion, the safety valve comprising:
a valve body; and within the valve body:
   a closure member;
   a valve seat; and
   a thermally activated fuse member;
   wherein the closure member is biased towards the valve seat by magnetic force, and
wherein the thermally activated fuse member acts in normal operation to maintain the closure member spaced from the valve seat, but, when a critical temperature is exceeded, the thermally activated fuse member acts to allow the closure member to move into sealing engagement with the valve seat.

Preferably, the valve further comprises an inlet upstream of the closure member and an outlet downstream of the valve seat, and the fluid flow direction coincides with the required direction of movement of the closure member towards the valve seat. This assists in closure of the valve when the thermal fuse is activated, and also in maintaining the valve in the closed position after activation.

Suitably, the magnetic force biasing the closure member towards the valve seat need only be sufficient that the closure member moves into sealing engagement with the valve seat as a result of a combination of the magnetic attraction and the fluid flow acting on the closure member to drive it in the direction required for sealing engagement with the valve seat.
Preferably, however, the magnetic force biasing the closure member towards the valve seat is sufficient to bring the closure member into sealing engagement with the valve seat even in the absence of any fluid flow through the valve.

Preferably, the magnetic force is provided by a magnet placed at or adjacent the valve seat. More preferably, the magnet forms the valve seat.

Preferably, the valve further comprises sealing means arranged to be situated between the closure member and the valve seat when they are in sealing engagement. This ensures a leakproof seal is formed between the closure member and the valve seat.

Preferably, the critical temperature is greater than the temperature that would be expected to result from normal use of the valve, such as in a domestic environment. Preferably, therefore, the critical temperature is 45 °C or above, such as 50 °C, or 82 °C. The critical temperature must be below the temperature at which the valve itself will burn or otherwise suffer catastrophic destruction or distortion of its structure due to the effects of heat. Suitably, such a temperature would be less than 250 °C. Preferably, the critical temperature at which the thermally activated fuse is activated is not more than 200 °C. Preferably, the critical temperature is chosen to be as low as possible within the above constraints, in order that the valve closure is activated as soon as possible after the start of a fire in order to prevent its spread.

Preferably, at least a part of the thermally activated fuse member is made from a thermoplastics, preferably a polyamide or a polyvinyl chloride. Preferably, the thermally activated fuse member comprises a thermally activated fuse portion and a retainer, and the thermally activated fuse portion is made from a thermoplastics, preferably a polyamide or a polyvinyl chloride. Preferably, the thermoplastics is suitable for injection moulding, as this is a convenient way to form the thermally activated fuse member. Preferably, the thermoplastics selected does not burn at or around the temperature at which the thermally-activated fuse is activated, and more preferably has a burning temperature at least 100 °C above the temperature at which the thermally activated fuse is activated, in order to prevent damage to the valve and further spread of the fire.

The critical temperature of a thermoplastics is in general its glass transition temperature.

Suitably, the thermoplastics is polyvinyl chloride (PVC). PVC has a melting point of 182 °C and a glass transition temperature of 82 °C. The softening at the glass transition temperature, in conjunction with the force exerted on the fuse member by the closure member, thus permits the valve to be activated at a temperature of 82 °C or slightly above.

Preferably, the thermoplastics is a polyamide, and more preferably is polyamide 6.6. The glass transition temperature of polyamide 6.6 is around 50 °C, and its melting point is 215 °C. The softening at the glass transition temperature, in conjunction with the force exerted on the fuse member by the closure member, thus permits the valve to be activated at a temperature of 50 °C or slightly above.

Preferably, the thermally activated fuse member or the thermally activated fuse portion and at least a part of the valve body are formed in a single piece. More preferably, the retainer, thermally activated fuse portion and at least a part of the valve body are formed in a single piece. Preferably, the single piece comprising the retainer, the thermally activated fuse portion and the at least a part of the valve body is formed from a thermoplastics, preferably a polyamide or a polyvinyl chloride, most preferably polyamide such as polyamide 6.6, and is so formed that the thermally activated fuse portion will, on exposure of the valve to a temperature above the critical temperature, be the first part to soften such that the retainer is released.

Suitably, this may be achieved by making the thermally activated fuse portion thinner than the retainer and the valve body. The thermally activated fuse portion must be sufficiently thick to withstand the forces on it due to the magnetic attraction biasing the closure member towards the valve seat applying force to the retainer via the closure member under normal operating temperatures, but thin enough to soften and/or break at the activating temperature before the valve body and/or retainer is softened or damaged to any significant extent by heat. The thickness required will depend on the properties of the materials used for the thermally activated fuse portion and on the forces applied to it in normal operation by the closure member via the retainer. Where the valve outlet and the thermally activated fuse portion are made from polyamide 6.6, the thickness of the thermally activated fuse portion may suitably be between 50 and 90% of that of the thickness of the wall of the outlet, preferably between 55 and 80%, more preferably between 60 and 75%, such as 66%.

It is surprising that it is possible to achieve this without a significant portion of the valve body or retainer softening or melting on heating prior to the thermally activated fuse portion releasing the retainer and closing the valve. That this is possible permits the valve construction to be significantly simplified compared with prior art valves, and thus for the cost of producing the valve to be significantly reduced.

Preferably, the thermally-activated fuse member and at least a part of the valve body, or the thermally activated fuse portion and the at least a part of the valve body, are formed as a single piece by injection moulding of a thermoplastics. This permits a simple and low cost manufacture of these components of the valve. This, however, places a further constraint on the thickness of the thermally activated fuse portion, as the mould cavity for formation of the thermally activated fuse portion must be sufficiently large that the molten thermoplastics may flow therethrough to fill the mould cavity for the retainer, where that is made in one piece with the thermally activated fuse portion. If the mould cavity for formation of the thermally activated fuse portion is too small, then the flow of the thermoplastics to the cavity for the retainer is not reliably achieved and a significant portion of the moulded items must be rejected as the proper formation of the retainer is vital for the correct function of the valve. It is found by the present inventors that, for a valve having an outlet wall thickness of 0.75 mm and a retainer diameter of 2.75 mm, a thermally activated fuse portion size of 0.5 mm thick and 1 mm wide is sufficient for reliable formation of the thermally activated fuse portion and retainer by injection moulding in one piece. It is expected that the skilled man can determine suitable proportions for other valve sizes from this information and routine experimentation.

The magnetic force biasing the closure member towards the valve seat may be provided by the closure member comprising a magnet and a material attracted by a magnet placed at or adjacent the valve seat, by a magnet placed at or adjacent the valve seat and the closure member comprising a material attracted by a magnet, or by a magnet placed at or adjacent the valve seat and the closure member comprising a magnet. It may be preferred in certain circumstances for there to be a magnet at or adjacent the valve seat and for the closure member to comprise a magnet; however, the provision of two permanent magnets increases the cost of the components of the valve and also increases the complexity of assembling the valve as the poles of the magnets must be correctly aligned to ensure valve function. Thus, it is preferred from the point of view of cost for either the closure member to comprise a magnet or for a magnet to be provided at the valve seat, and for a material attracted to a magnet to be either provided at or adjacent the valve seat or comprised in the closure member respectively. A material attracted to a magnet is an unmagnetised ferromagnetic material such as iron, nickel, cobalt or steel. Preferably, the permanent magnet or magnets are selected from the group consisting of neodymium magnets, samarium cobalt magnets, Alnico magnets and strontium ferrite magnets. It is preferred to use such strong magnets as this minimises the likelihood of failure of the valve. Thus, as neodymium magnets are the strongest listed here, these are currently preferred. Preferably, a permanent magnet is provided at the valve seat and the closure member comprises a material attracted to a permanent magnet.

Suitably, the valve body is made from a plastics material or from a metal which is not magnetic, is diamagnetic or is weakly paramagnetic, such as aluminium, bronze or brass. In view of the aim of the valve being lightweight, aluminium or plastics are preferred. More preferably, the valve body is made of a plastics material. In particular, where it is intended that the thermally activated fuse portion and/or the retainer is manufactured in one piece with the valve body, it is preferable that the valve body is made from heat-softenable plastics (thermoplastics or thermosoftening plastics). Particularly preferable thermoplastics are polyamides and polyvinyl chlorides (PVC).

Preferably the weight of the whole valve is 50 g or less, such as 25 g or less, more preferably 10 g or less, such as 7 g.

Preferably, at least a part of the inner surface of the valve body comprises a plurality of ridges and channels arranged to ensure the correct alignment of the closure member in the valve body and to permit the passage of fluid from the inlet around the closure member.

In order to ensure that the valve also acts as a firebreaker, that is, that it prevents the spread of fire along a tubing as well as being able to close off the flow of oxygen in the tubing, it is preferred that the material from which the valve body is formed is an autoextinguishing material. Where the valve body is formed from a thermoplastics, it is thus preferred to use a thermoplastics such as a polyamide rather than a polyvinyl chloride, as the latter will burn, whereas the former is autoextinguishing at temperatures up to 300 °C. Preferably, the polyamide is polyamide 6.6.

For the same reason, it is preferred for the firebreaker to be sufficiently long that the fire may not jump from the outlet tubing to the inlet tubing. For example, the length of the valve body between the two outlets may be between 10 and 20 mm long, such as 15 mm.

Preferably, the valve body incorporates a shield that reduces the magnetic field produced outside the valve by the magnet(s) providing the biasing magnetic force. Suitably, this may take the form of a metallic label surrounding at least a part of the valve body.

For ease of assembly, it is preferred to form the valve body in two sections. These may be joined by any usual means, such as a cooperating screw-thread on part of each section, or a friction fit join. Any such join should be difficult to disconnect to minimise the likelihood of accidental (or indeed intentional) dismantling of a valve by a patient or one of his household, or by means of the movement of or forces applied to the valve during the course of normal use. Thus, if a cooperating screw thread join is used, it is preferred to increase the difficulty of separating the two halves of the valve body by welding or gluing, or otherwise attaching, the two halves together once the valve is assembled. However, for ease of assembly and cost reduction, it is preferred to use a push-fit join (i.e. with one or more lugs and co-operating recesses), as this is very difficult to prise apart once assembled, without requiring welding or gluing in addition.

Further, the join between the two sections should be gas-tight, and accordingly it is preferred to provide a sealing means at the join that ensures a gas-tight seal is formed. Suitably, this may be provided by an O-ring or grommet of known type which is compressed between the two sections when they are joined to provide a seal.

The inlet and outlet of the valve body are suitably formed to connect to a gas delivery line or other flow path for gas, an outlet of a gas supply, and/or a gas delivery means such as a face mask or nasal prongs in the case of oxygen to be delivered to a patient. Any known or conventional connection means may be provided, such as a friction push-fit for use with flexible piping such as a fir tree connector, a luer fitting, lateral projections forming a bayonet type coupling such as a luer lock fitting, or co-operating screw threads. It may of course be necessary to comply with local standards for connectors, for example where the valve is to be used in respiratory equipment. In the EU, it is necessary for such connectors to conform to standard EN 13544-2 when used in respiratory therapy equipment.

It is found by the present inventors that it is preferable to form the inlet and outlet of the valve such that they are somewhat longer than is required by the EU standard, such as around 18 mm or longer, rather than 12 mm as required by the EU standard, in order to ensure a secure attachment of the flow path to the inlet or outlet. In addition, this increased length results in an increased distance between the thermally activated fuse portion and the body of the valve, and so increases the likelihood that a fire is stopped by activation of the fuse and/or by the fire encountering an autoextinguishing material before it can heat the valve and its component parts sufficiently to cause them damage that might prevent the valve from functioning.

The thermally-activated fuse portion may be manufactured as a single piece with the valve body or may be manufactured as a separate component and subsequently joined to the valve body. The thermally-activated fuse portion must react to heat in such a way that the join between the valve body and the fuse fails in response to a temperature typical of that resulting from a fire in the gas delivery line or the immediately surrounding area.
It must also be sufficiently strong when not subjected to temperatures above the critical temperature that it can resist the attractive force biasing the closure member towards the valve seat. Suitable materials for the thermally-activated fuse portion include plastics, solder or waxes. Preferably, the thermally-activated fuse portion is made of a plastics material, preferably a thermoplastic material, having a critical temperature (the glass transition temperature) of no more than 200 °C and greater than the temperature to which the valve is expected to be subjected during normal use, such as 45 °C. Preferably the critical temperature is between 50 °C and 100 °C, and more preferably is in the lower part of that range, such as 50 °C to 60 °C. Preferably, the thermally-activated fuse portion is made of a polyamide or a polyvinyl chloride (PVC), and more preferably from a polyamide such as polyamide 6.6. Suitably, the thermally activated fuse portion may be formed as one or more projections from the wall of the valve body towards the interior of the body, against which the retainer can bear in normal use or which connect to the retainer, for example by being formed in one piece with the retainer, to prevent the closure member from moving into sealing engagement with the valve seat. Where this is so, the area of the valve body through which the fluid may flow should be selected such that the required fluid flow rate may pass through the valve without a substantial pressure drop being caused by the thermal fuse portions obstructing the fluid flow. The skilled man is able to calculate the dimensions of the outlet, thermally activated fuse portions and retainer required to permit the intended flow rate. In preferred embodiments, the area is calculated to provide a flow rate of 10-15 1/min flow through the valve without a significant pressure drop.

The retainer is preferably in the form of a substantially elongate member, such as an elongate cylinder or other prism. The material from which the retainer is made is not particularly restricted as long as the retainer is substantially rigid, so that it is able to resist the attractive force biasing the closure member towards the valve seat. Suitable materials include plastics and metals. As it is an aim for the valve to be lightweight, materials such as plastics and aluminium are preferred.

In a particularly preferred embodiment the retainer, thermally activated fuse portion and at least a part of the valve body are formed as a single component. Where this is done, the relative thickness of the thermally activated fuse portion and the valve body and retainer should be selected such that the thermally activated fuse portion will melt or soften in order to release the retainer without resulting in melting, softening or burning to the valve body and/or retainer that would damage the function or integrity of the valve, but also such that the thermally activated fuse portion is able to withstand the pressure exerted on it by the closure member and the flow of fluid through the valve pressing on the retainer. Suitable relative thicknesses of these elements will depend on the materials chosen for the components of the valve and the flow rate at which it is intended to operate the valve, and may be determined by simple trial and error experimentation. Suitable values for polyamide 6.6 are given above.

The magnetic materials used at or adjacent the valve seat and/or comprised in the closure member may be any suitable permanent magnet. Where only one of these locations comprises a permanent magnet, the other must comprise a ferromagnet.

It is preferable to use a strong magnet as this increases the speed of closure of the valve in response to the removal of the retainer, and also increases the force applied to the thermally activated fuse portion, so that less heat will be required to activate the valve. Suitable strong magnets include neodymium magnets, samarium cobalt magnets, Alnico magnets and strontium ferrite magnets.

A wide range of forms of valve seat and closure member may be used in the valve as long as they are capable of moving towards each other to form an obstruction to the flow of gas through the valve. Preferably, they are used in conjunction with a sealing member in order to ensure the formation of a leakproof seal. Suitable shapes for the valve seat and closure member will be apparent to the person skilled in the art. Preferably, the valve seat and the closure member are formed such that they move towards one another in a particular alignment that brings them into a sealing relationship, which may be achieved where one has a concave surface facing the other, said other preferably being smaller than the concave face and/or having a convex face shaped to co-operate with the concave face. It is found that providing one of the valve seat and the closure member with a concave face facing the closure member or valve seat respectively provides an improved seal compared with the situation where both the valve seat and the closure member have adjacent flat parallel faces. Examples of preferred forms of the valve seat and closure member are shown in the Figures. While the attraction and contact between the magnet or material attracting a magnet at the valve seat and the material attracting a magnet or the magnet comprised in the closure member may of itself provide a sealing engagement between the valve seat and closure member sufficient to reduce significantly the flow of fluid through the valve, it is strongly preferred that at least one sealing element is also provided in order to ensure a leakproof seal is formed on closure of the valve. The at least one sealing element may be manufactured as part of the valve body, part of the valve seat, a coating on one of the valve seat or the closure member, or may be provided as separate components. Suitably, the sealing elements may be rubber 0-rings.

In a second aspect of the invention is provided a firebreaker, which comprises a safety valve according to the first aspect of the invention of which at least the valve body, and preferably also the outlet, is formed from an autoextinguishing material.

In a third aspect of the invention is provided an oxygen delivery system, comprising:
a source of oxygen;
oxygen delivery means; and
a flow path for oxygen connecting the source of oxygen to the oxygen delivery means;
wherein the flow path for oxygen comprises at least one valve according to the first aspect of the invention or firebreaker according to the second aspect of the invention, the at least one valve being arranged in the flow path such that the flow of oxygen from the source of oxygen to the oxygen delivery means is closed when the thermally activated fuse member is activated and/or the at least one firebreaker being arranged in the flow path such that the progress of a fire along the flow path is halted on reaching the firebreaker.

It has been found by the present inventors that, when using a firebreaker according to the invention in conjunction with a flow path made from a combustible material such as PVC, the heat generated by a fire in the flow path when the flow rate of oxygen therethrough is low, such as 0.5 1/min, is not always sufficient to activate the thermally activated fuse member. However, the autoextinguishing nature of the firebreaker itself is sufficient to halt the progress of the fire along the flow path, as once the PVC tubing is consumed there is no further fuel to propagate the fire. Also, where the valve is activated but an imperfect seal is formed between the valve seat and the closure member, the autoextinguishing nature of the firebreaker ensures that the progress of the fire is halted despite the continuing (although significantly reduced) flow of oxygen.

Preferably, the flow path comprises two valves according to the first aspect of the invention or two firebreakers according to the second aspect of the invention, the first of which is placed proximate to the oxygen delivery means and the second of which is placed proximate to the source of oxygen. Where the flow path is of significant length, it is preferred to provide a firebreaker or valve at regular intervals along the length of the flow path, such as every five metres or three metres, in order that wherever along a flow path a fire may break out it may be prevented from spreading along the whole of, or a significant part of, the flow path.

Preferably, the source of oxygen is selected from the group consisting of: an oxygen concentrator, a cylinder of compressed oxygen gas, and a Dewar containing liquid oxygen.

Preferably, the system is for delivery of oxygen to a person, and the oxygen delivery means is selected from the group consisting of: nasal prongs, a face mask and an endotracheal tube.

Preferably, the flow path for oxygen comprises flexible plastic tubing, such as PVC tubing.

The following is a description, by way of example only and with reference to the accompanying drawings, of presently preferred embodiments of the present invention. Regarding the drawings:
Figure 1 shows a cross-section of a valve according to an embodiment of the present invention.
Figure 2 shows a cross section on the line A-A' of Figure 1, showing the arrangement of the thermally activated fuse portions.
Figure 3 shows a cross-section on the line B-B' of Figure 1, showing the arrangement of the vertical ridges within the cavity of the spigot at the inlet end of the valve.
Figure 4 shows a cross-section of a valve according to a second embodiment of the present invention.
Figure 5 shows a cross-section of the valve of Figure 4 in its closed position, having been activated by a suitable temperature rise.
Figure 6 shows an oxygen delivery system according to a second aspect of the invention.

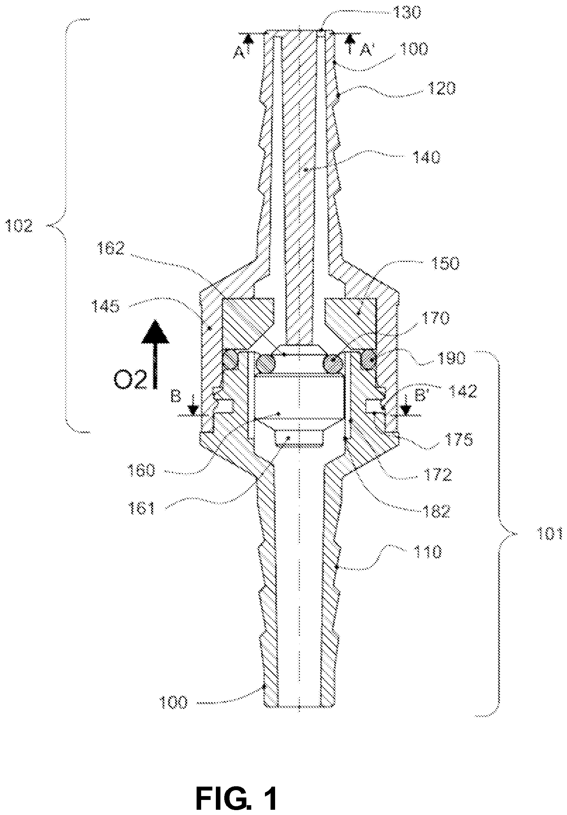

Referring to Figure 1, which shows a valve according to an embodiment of the present invention, the valve has a valve body 100 formed in two parts from a plastics material. The first part 101 of valve body 100 comprises a hollow inlet conduit 110, closure member 160 provided with a sealing element 170, and a first spigot 172 having on its external surface an annular recess 175.

The outside of the inlet conduit 110 is tapered, being narrower at the end distal from the closure member 160, and has ridges formed as concentric rings around the axis of the conduit. This facilitates a friction push-fit of the inlet conduit to a gas flow path, such as a flexible plastics or elastomeric pipe. Other configurations of the external surface of the inlet conduit 110 are envisaged, such as the provision of a screw thread to correspond to a screw thread provided at the connecting end of the gas flow path, the provision of one or more projections or lugs on the external surface of the conduit to engage with one or more corresponding recesses or slots provided in the connecting end of the gas flow path (or vice versa), examples of which might be a Luer lock connection or a bayonet-type connection. Of course, the inlet conduit 110 can also act as the outer part of a connection to a gas flow path by being formed with a screw thread on its interior surface arranged to cooperate with a screw thread on the outer surface of the gas flow path, or with one or more recesses or slots (or projections or lugs) arranged to engage one or more projections or lugs (or recesses or slots) provided on the external surface of a gas flow path.

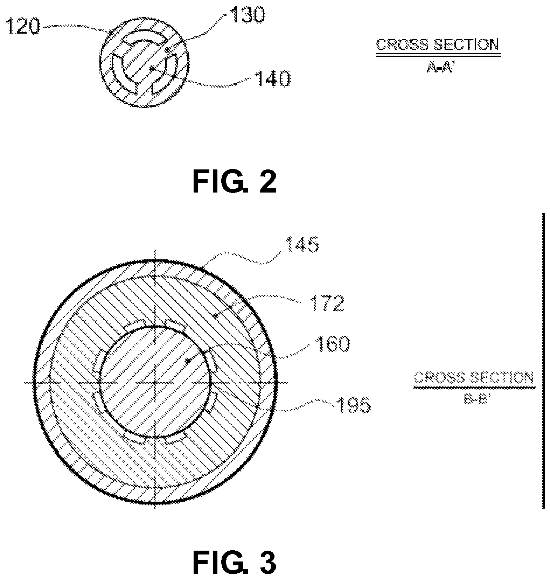

At the upper (as shown) end of inlet conduit 110, the first part of the valve body widens and forms a generally cylindrical spigot 172. The outer surface of the spigot is provided with an annular recess 175. The inner wall of the spigot 172 forms a cylindrical cavity 182. In the cylindrical cavity 182, and over the upper end of the inlet conduit 110 is placed closure member 160. The closure member 160 is formed from a material attracted to a magnet, in this case steel, and is generally cylindrical, with the axis of the cylinder arranged to be substantially coincident with the axis of the inlet conduit 110. The maximum diameter of the closure member 160 is slightly smaller than the internal diameter of the cylindrical cavity 182. The cylindrical cavity 182 has on its inner walls vertical (as drawn) ridges 195, which serve both to locate the closure member in the correct alignment within the cavity, and to permit the flow of gas from inlet 110 around closure member 160 and through the outlet when the valve is open. Figure 3 shows a cross-section through Figure 1 at the line B-B', showing the vertical ridges 195 in cross-section. It can be seen that the vertical ridges 195 abut the closure member 160, serving to maintain it in position in the spigot, and form between them channels through which gas may pass.

Returning to Figure 1, closure member 160 has two generally cylindrical extensions in the axial direction (vertically as drawn). The lower extension 161 has a diameter slightly smaller than the internal diameter of inlet conduit 110. The upper extension 162 has a maximum diameter slightly larger than the internal diameter of annular magnet 150, a tapered upper end, and a curved waist to accommodate sealing 0-ring 170 which is placed around upper extension 162 and fits snugly around the waist of the upper extension while being held in place between the main body of the closure member 160 and the maximum diameter of the upper extension occurring between the waist and the tapered upper end.

The second part 102 of the valve body 100 comprises a hollow outlet conduit 120, three thermally activated fuse portions 130, of which one is shown, a retainer 140, a second spigot 145 having an annular projecting lug 142 on its inner surface, annular magnet 150 and second sealing means 190.

Hollow outlet conduit 120 is formed similarly to hollow inlet conduit 110, being tapered such that its narrower end is at the end distal from the spigot 145, and having concentric annular ridges to facilitate a friction push-fit of tubing thereto. The alternative arrangements of inlet conduit 110 described above may likewise apply to outlet conduit 120. The conduits 110 and 120 may be formed to fit to gas flow paths in the same or in different ways.

At the lower end of outlet conduit 120 as shown in Figure 1, the second part 102 of valve body 100 widens to form a second spigot 145. The spigot 145 is generally cylindrical and has on its inner surface an annular projecting lug 142 adapted to correspond to and to engage with the annular recess 175 on the first spigot 172 of the first part 101 of valve body 100 to join the two parts 101, 102 of the valve body 100 together. It will be appreciated that other means of joining the two parts 101, 102 of valve body 100 may be used, such as co-operating screw threads. As it is important that the valve is not able to be easily dismantled, either intentionally by a person or unintentionally as a result of the movement and impacts sustained during normal use, the joining means should result in a firm join between the two parts of valve body 100. In order to ensure this, additional means for fixing the two valve body halves together may be used, such as welding or gluing.
However, it is found that such additional means are not required when the illustrated join using cooperating lugs and recesses is employed. Further, the join must provide a gas-tight seal, and the sealing means provided to ensure this is described below.

In the second spigot 145 is provided annular magnet 150 at the valve seat. This has an outer diameter such that the magnet 150 closely fits within the cylindrical cavity of the second spigot 145, and an inner diameter sufficient to allow the passage of retainer 140 and the required gas flow from the interior of the spigot to the outlet conduit 120. In addition, the lower face of the annular magnet 150 as shown in the Figure is graded from a maximum thickness at the outside (ie the part adjacent the inner wall of spigot 145) to a minimum thickness at the inside (ie the part adjacent the retainer 140) such that a concave surface of the magnet 150 is presented to the magnet 185 and sealing means 170. The lower face of annular magnet 150 as shown also presents a shoulder which faces the upper edge of the first spigot 172 of the first part 101 of the valve body 100 when the two parts 101,102 are joined. The annular magnet 150 is in this embodiment a neodymium magnet.

Between the shoulder of annular magnet 150 and the upper edge of the first spigot 172 of the first part 101 of the valve body 100 is provided an O-ring 190. When the two parts 101, 102 of the valve body 100 are joined, the O-ring 190 provides a sealing engagement between the upper part of the first spigot 172 and the shoulder of annular magnet 150. This ensures that the cavity formed by the two spigots is gas-tight.

The inner wall of second spigot 145 has vertical ridges (not shown) to grip and maintain in position the annular magnet 150 within the spigot. This assists in the assembly of the valve as the magnet 150 is held in the required position in the spigot during assembly.

Through the outlet conduit 120 passes retainer 140. This is a cylindrical member having a diameter sufficiently smaller than the inner diameter of outlet conduit 120 that gas may flow through the outlet conduit 120 around the retainer 140 at the flow rate required. The retainer 140 extends at its lower end as shown in the Figure to the closure member 160 provided in the first part 101 of valve body 100, and at its upper end as shown to the thermally activated fuse portions 130 provided at the distal end of the outlet conduit 120. The thermally activated fuse portions 130 engage the upper end of the retainer 140 and maintain it in contact with closure member 160. The retainer 140 must be made of a material that is sufficiently rigid to prevent the movement of the closure member 160 and sealing 0-ring 170 into sealing engagement with magnet 150 when the upper end of retainer 140 is engaged by thermally activated fuse portions 130.

Three thermally activated fuse portions 130, of which one is shown, are provided at the upper (as drawn) end of outlet conduit 120. They are formed in one piece with the retainer and valve body from a thermoplastics material that softens or fuses at or above a critical temperature, preferably polyamide. Figure 2 shows a cross section along A-A' in Figure 1 depicting the three thermally activated fuse portions 130 extending from the inner wall of outlet 120 to retainer 140. Between the fuse portions 130 channels are formed for passage of gas through the outlet 120.

In normal use, oxygen gas enters the valve through inlet conduit 110, passes around the outside of closure member 160 through the recesses in the side walls of the first spigot 172. The closure member 160 is held in place against the flow of gas by retainer 140 and thermally activated fuse portions 130. The gas flow then continues through the central hole of the annular magnet 150 and through the outlet conduit 120 around the retainer 140 and between the thermally activated fuse portions 130.

In the event of a fire in the vicinity of the outlet conduit 120, the oxygen flowing through the valve will cause the fire to become more intense in that region. Thus, the temperature will rise above the critical temperature of the thermally activated fuse portions 130, and the fuse portions will soften and release the retainer 140. This permits the closure member 160, which is attracted towards annular magnet 150, and its associated sealing means 170 to move towards and into sealing engagement with annular magnet 150, preventing the flow of oxygen into the outlet conduit 120 and thereby preventing the oxygen from supporting the fire.

However, where the valve body and the outlet are made from a suitable autoextinguishing plastics, even if the fire is not sufficiently fierce to raise the temperature of the thermally activated fuse portion above its critical temperature, or even if the temperature is raised above the critical temperature but the seal formed on closure of the valve is not complete, the valve halts the progression of the fire along the gas flow path as the valve body does not burn and deprives the fire of fuel.

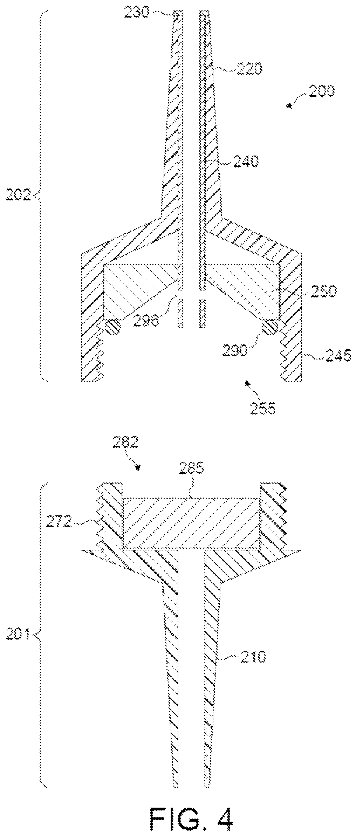

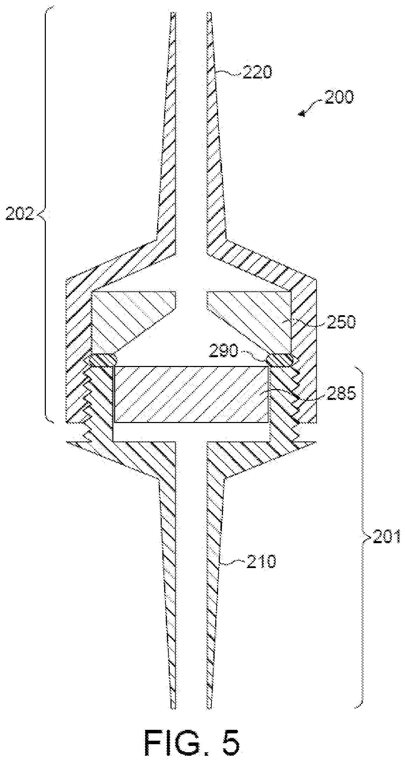

Referring now to Figures 4 and 5, which shows a valve according to a second embodiment of the present invention, the valve has a valve body 200 formed in two parts 201, 202 from a plastics material. The first part 201 of valve body 200 comprises a hollow inlet conduit 210, magnet 285, and a first spigot 272 having on its external surface a screw thread.

The outside of the inlet conduit 210 is tapered, being narrower at the end distal from the spigot 272. This facilitates a friction push-fit of the inlet conduit to a gas flow path, such as a flexible plastics or elastomeric pipe. As described for inlet conduit 110 in the embodiment of Figure 1, other configurations of the external surface of the inlet conduit 210 are possible.

At the upper (as shown) end of inlet conduit 210, the first part of the valve body widens and forms a generally cylindrical spigot 272. The outer surface of the spigot is provided with a screw thread. The inner wall of the spigot 272 forms a cylindrical cavity 282. Over the upper end of the inlet conduit 210 and within the cylindrical cavity 282 is placed a magnet 285. The magnet 285 is a neodymium magnet and is cylindrical, with the axis of the cylinder arranged to be substantially coincident with the axis of the inlet conduit 210. The diameter of the magnet 285 is smaller than the internal diameter of the cylindrical cavity 282 to allow the passage of gas around the sides of magnet 285.

The second part 202 of the valve body 200 comprises a hollow outlet conduit 220, one annular thermally activated fuse portion 230 in the form of a shoulder formed at the upper end as drawn of outlet 220, a retainer 240, a second spigot 245 having a screw thread on its inner surface, a magnet 250 and sealing means 290.

Hollow outlet conduit 220 is formed similarly to hollow inlet conduit 210, being tapered such that its narrower end is at the end distal from the spigot 245 to facilitate a friction push-fit of tubing thereto. The alternative arrangements of inlet conduit 110 described above may likewise apply to outlet conduit 220. The conduits 210 and 220 may be formed to fit to gas flow paths in the same or in different ways.

At the lower end of outlet conduit 220 as shown in Figure 4, the second part 202 of valve body 200 widens to form a second spigot 245. The spigot 245 is generally cylindrical and has on its inner surface a screw thread adapted to correspond to and to engage with the screw thread on the outer surface of first spigot 272 of the first part 201 of valve body 200 to join the two parts 201, 202 of the valve body 200 together. The join must provide a gas-tight seal, and the sealing means 290 provided to ensure this is described below.

In the second spigot 245 is provided annular magnet 250 at the valve seat. This has an outer diameter such that the magnet 250 closely fits within the cylindrical cavity 255 of the second spigot 245, and an inner diameter sufficient to allow the passage of retainer 240 and the required gas flow from the interior of the spigot to the outlet conduit 220. In addition, the lower face of the annular magnet 250 as shown in the Figure is graded from a maximum thickness at the outside (ie the part adjacent the inner wall of spigot 245) to a minimum thickness at the inside (ie the part adjacent the retainer 240) such that a concave surface of the magnet 250 is presented to the magnet 285. The lower face of annular magnet 250 as shown also presents a shoulder which faces the upper edge of the first spigot 272 of the first part 201 of the valve body 200 when the two parts 201,202 are joined. The inner edge of the shoulder of annular magnet 250 forms a circle of a diameter that is approximately the same as, or smaller than, that of the magnet 285. Magnet 285 is in this embodiment a neodymium magnet.

Between the shoulder of annular magnet 250 and the upper edge of the first spigot 272 of the first part 201 of the valve body 200 is provided an O-ring 290. When the two parts 201, 202 of the valve body 200 are joined, the O-ring 290 provides a sealing engagement between the upper part of the first spigot 272 and the shoulder of annular magnet 250. This ensures that the cavity formed by the two spigots is gas-tight. In addition, the O-ring 290 has an inner diameter closely similar to or slightly smaller than the outer diameter of magnet 285. When the two parts of the valve body are joined, the pressure applied to the O-ring 290 deforms it. This permits O-ring 290 to also seal the join between the magnet 285 and annular magnet 250 when the valve closes.

In outlet conduit 220 is placed retainer 240 that extends from the annular thermally activated fuse portion 230 at the upper (as drawn) end of outlet conduit 220 into the cylindrical cavity 255 of spigot 245. The retainer is tubular and has ports 296 formed in the side wall. The retainer 240 serves to maintain the magnet 285 in an open position during normal operation of the valve. The ports 296 of retainer 240 are placed such that they are not obstructed by the annular magnet 250 when the valve is assembled.

An annular thermally activated fuse portion 230 is provided at the upper (as drawn) end of outlet conduit 220. It is formed from a material that softens or fuses at or above a critical temperature, in this case polyamide, in a single piece with the second half 202 of the valve body. The thermally activated fuse portions 230 forms a shoulder as an extension of the upper end as drawn of outlet 220 against which retainer 240 bears.

The poles of magnets 250 and 285 are arranged such that the magnets attract one another when the valve is constructed as shown in Figures 4 and 5.

The dimensions of a valve according to the second embodiment may be similar to those specified for the first embodiment.

In normal use, oxygen gas enters the valve through inlet conduit 210, passes through the gaps between the walls of the spigot 272 and the magnet 285. Attraction between the magnets pushes magnet 285 on to the retainer 240 to permit gas flow. The gas flow then continues through the ports 296 of retainer 240 and through the outlet conduit 220 via the retainer 240.

In the event of a fire in the vicinity of the outlet conduit 220, the oxygen flowing through the valve will cause the fire to become more intense in that region. Thus, the temperature will rise above the critical temperature of the thermally activated fuse portion 230, and the fuse portions will soften and release the retainer 240. This permits the magnet 285, which is attracted towards annular magnet 250, to move towards and into sealing engagement with annular magnet 250, as shown in Figure 5. Magnet 285 forms a sealing engagement with magnet 250 due to the O-ring 290, ensuring that no gas can pass between the two magnets. Thus, the flow of oxygen into the outlet conduit 220 is prevented, and the oxygen cannot further support the fire.

However, where the valve body and the outlet are made from a suitable autoextinguishing plastics, even if the fire is not sufficiently fierce to raise the temperature of the thermally activated fuse portion above its critical temperature, or even if the temperature is raised above the critical temperature but the seal formed on closure of the valve is not complete, the valve halts the progression of the fire along the gas flow path as the valve body does not burn and deprives the fire of fuel.

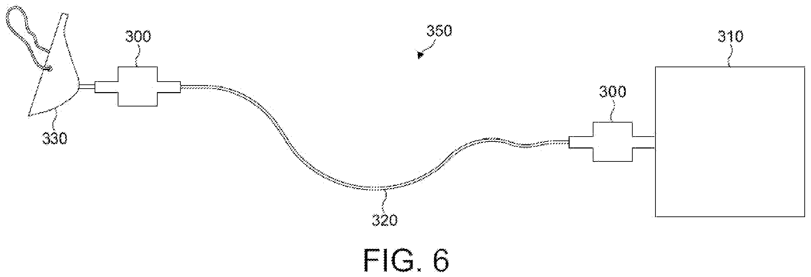

Referring now to Figure 6, this Figure depicts an oxygen delivery system for delivering oxygen to a patient according to a second aspect of the invention. The system 350 comprises a source of oxygen 310. This oxygen source may be any oxygen source known for use in delivering oxygen to a patient or person requiring oxygen, such as an oxygen concentrator, which may be static or portable, a compressed cylinder of gaseous oxygen, or a Dewar of liquid oxygen. Connected to the source of oxygen 310 is a valve 300 according to the first aspect of the present invention, which itself is connected at its outlet to a flexible gas flow path 320. Suitably, the gas flow path 320 may be a flexible plastics or elastomeric pipe, with plastics being preferred for ease of sterilisation and low cost, as it is preferred to use such components disposably. The end of gas flow path 320 furthest from oxygen source 310 is connected to the inlet of a second valve 300 of the first aspect of the invention, whose outlet is connected to gas delivery means 330. Gas delivery means 330 is depicted as a face mask, but may equally be other known gas delivery means, such as nasal prongs or an endotracheal tube.

In use, oxygen flows from gas source 310 through first valve 300, flexible gas flow path 320, and second valve 300, and into the gas delivery means 330. In the event of a fire close to the gas delivery means, such as if the patient removes the mask from his face without switching off the flow of oxygen and then lights a cigarette, second valve 300 is activated by the temperature rise and thus cuts off the flow of oxygen from the gas source 310, as described above. In the event of a fire that causes a temperature rise not close to the mask but in the gas flow path 320 between the valves, such as if the flow path 320 is brought into contact with a naked flame, the temperature rise triggers the first valve 300, which cuts off supply to the whole of the flow path 320. The two valves are preferably provided as an apparatus having only the first valve may not be activated sufficiently quickly to prevent harm to a patient when a fire is caused in the immediate vicinity of the gas delivery means, and an apparatus having only the second valve does not prevent oxygen flow continuing to support combustion in the event of a fire elsewhere in the flow path.

### Example: Testing of a device according to the invention as a firebreaker and valve

The devices used in this Example are made in accordance with the first embodiment of the invention, as shown in Figure 1, from polyamide 6.6 by injection moulding. The apparatus used for injection moulding has a clamping force of 80 tonnes (metric). The process temperature in the cylinder was between 185 and 235 °C, using a temperature curve of 185 - 205 - 215 - 235 °C, and at the nozzle was 260 °C. The injection pressure was 120 bar and the back pressure 55 bar.

The annular magnet 150 was a neodymium magnet, and the closure member 160 was made of steel.

The dimensions of the devices were as follows:
total length from inlet to outlet: 53 mm
maximum diameter of valve: 15.5 mm
length of inlet: 18 mm
length of inlet plus spigot: 27.8 mm
outer diameter of inlet: 6 mm tapering to 6.63 mm at spigot
inner diameter of inlet: 3.5 mm tapering to 3.96 mm at spigot
length of outlet: 18 mm
length of outlet plus spigot: 31.5 mm
outer diameter of outlet: 6 mm at fuse tapering to 6.63 mm at spigot
inner diameter of outlet: 4 mm at fuse; 4.67 mm at spigot
length of retainer: 24.75 mm
diameter of retainer: 2.75 mm at fuse; 2 mm at spigot
extent of thermally activated fuse portion along circumference of outlet: 1 mm
inner diameter of outlet spigot: 12 mm
height of magnet at valve seat: 4 mm
diameter of magnet at valve seat: 12 mm
height of closure member 8 mm
maximum diameter of closure member: 7 mm
size of O-ring on closure member: 3.5 mm inner diameter, 1.5 mm thickness
size of O-ring between spigots: 9.5 mm inner diameter, 1.6 mm thickness
diameter of inlet spigot within vertical ridges: 7.1 mm
diameter of inlet spigot between vertical ridges: 8 mm

The testing was carried out on 100 devices, with oxygen gas supplied through a VisionAire SN:V5001008 concentrator, and conveyed to the valve inlet and from the valve outlet in PVC flexible tubing. Oxygen flow was measured using a TSI mass flow meter of model number 4140 SN 41401011013. The tests took place outdoors in the absence of wind. The results are as set out in the table below:

| Number of units tested | Flow setting (l/min) | Actual flow (l/min) | Position of valve | Location of fire | Result |
|---|---|---|---|---|---|
| 20 | 5 | 4.7 | Horizontal | 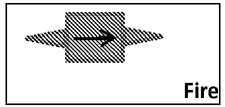 | OK |
| 20 | 2 | 1. 65 | Horizontal | 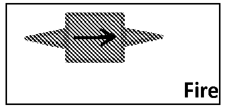 | OK* |
| 10 | 2 | 1. 65 | Vertical | 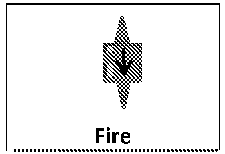 | OK |
| 10 | 5 | 4.7 | Vertical | 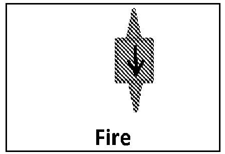 | OK |
| 10 | 5 | 4.7 | Vertical | 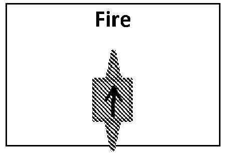 | OK |
| 10 | 2 | 1. 65 | Vertical | 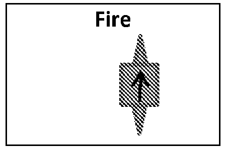 | OK |
| 5 | 0.5 | 0.66 | Vertical | 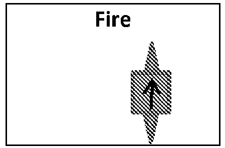 | OK |
| 5 | 0.5 | 0.66 | Vertical | 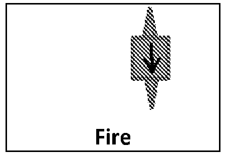 | OK |
| 10 | 0.5 | 0.66 | Horizontal | 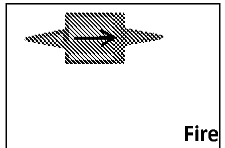 | OK |

| | | | | | |
|---|---|---|---|---|---|
| * in one unit, even though the flow was not completely stopped but continued at less than 0.5 1/min, the fire was arrested. | | | | | |

It will be appreciated that the invention is not restricted to the details described above with reference to the preferred embodiments but that numerous modifications and variations can be made without departing form the spirit or scope of the invention as defined in the following claims.

## Claims

1. A safety valve for closing, in response to a temperature increase, a flow path of a fluid, which fluid is combustible or capable of supporting combustion, the safety valve comprising:
a valve body (100, 200); and within the valve body (100, 200) :
a closure member (160, 285);
a valve seat; and
a thermally activated fuse member (130+140, 230+240); wherein the closure member (160, 285) is biased towards the valve seat by magnetic force, and
the thermally activated fuse member (130+140, 230+240) acts in normal operation to maintain the closure member (160, 285) spaced from the valve seat, but, when a critical temperature is exceeded, the thermally activated fuse member (130+140, 230+240) acts to allow the closure member (160, 285) to move into sealing engagement with the valve seat.

2. The safety valve according to claim 1, wherein the closure member (160, 285) comprises a material attracted to a magnet and is attracted towards the valve seat by a magnet placed at or adjacent the valve seat.

3. The safety valve according to claim 2, wherein the magnet (150, 250) forms the valve seat.

4. The safety valve according to any preceding claim,
wherein the valve further comprises an inlet (110, 210) upstream of the closure member and an outlet (120, 220) downstream of the valve seat, and wherein the fluid flow direction coincides with the required direction of movement of the closure member (160, 285) towards the valve seat.

5. The safety valve according to any preceding claim,
wherein the attraction biasing the closure member (160, 285) towards the valve seat is sufficient to bring the closure member (160, 285) into sealing engagement with the valve seat in the absence of any fluid flow through the valve.

6. The safety valve according to any preceding claim,
wherein at least a part (130, 230) of the thermally activated fuse member softens or melts above the critical temperature.

7. The safety valve according to any preceding claim,
wherein the critical temperature at which the at least a part (130, 230) of the thermally activated fuse member is activated is not more than 200 °C.

8. The safety valve according to any preceding claim,
wherein at least a part of the valve body (100, 200) and the thermally activated fuse member (130+140, 230+240) are formed in a single piece.

9. The safety valve according to claim 8, wherein the at least a part of the valve body (100, 200) and the thermally activated fuse member comprising a thermally activated fuse portion (130, 230) and a retainer (140, 240) are all formed in a single piece from a thermoplastics.

10. The safety valve according to claim 9, wherein the thermoplastics is polyamide.

11. The safety valve according to any preceding claim,
wherein at least a part of the inner surface of the valve body (100, 200) comprises a plurality of ridges (195) and channels arranged to ensure the correct alignment of the closure member (160, 285) in the valve body and to permit the passage of fluid from the inlet (110, 210) around the closure member (160, 285).

12. A firebreaker comprising a safety valve according to any one of the preceding claims, wherein the valve body (100, 200) is made from a material which does not burn at the critical temperature at which the thermally activated fuse member (130+140, 230+240) is activated.

13. A firebreaker according to claim 12, wherein the material is polyamide.

14. An oxygen delivery system (350), comprising:
a source of oxygen (310);
oxygen delivery means (330); and
a flow path (320) for oxygen connecting the source of oxygen (310) to the oxygen delivery means (330);
wherein the flow path (320) for oxygen comprises at least one safety valve (300) according to any one of claims 1-11 and/or at least one firebreaker (300) according to any one of claims 12 and 13, the at least one valve (300) being arranged in the flow path (320) such that the flow of oxygen from the source of oxygen (310) to the oxygen delivery means (330) is closed when the thermally activated fuse member (130+140, 230+240) is activated, and/or the at least one firebreaker (300) being arranged in the flow path (320) such that the further progress of a fire along the flow path (320) is halted by the presence of the firebreaker (300).

## Patentansprüche

1. Sicherheitsventil zum Verschließen in Reaktion auf eine Temperaturzunahme von einem Strömungsweg eines Fluids, wobei das Fluid verbrennbar ist oder in der Lage ist, eine Verbrennung zu unterstützen, wobei das Sicherheitsventil das Folgende umfasst:
einen Ventilkörper (100, 200); und innerhalb des Ventilkörpers (100, 200):
ein Verschlusselement (160, 285);
einen Ventilsitz; und
ein thermisch aktiviertes Sicherungselement (130+140, 230+240);
wobei das Verschlusselement (160, 285) durch Magnetkraft in Richtung des Ventilsitzes vorgespannt ist und das thermisch aktivierte Sicherungselement (130+140, 230+240) im Normalbetrieb so wirkt, dass es das Verschlusselement (160, 285) in einem Abstand zu dem Ventilsitz hält, wenn jedoch eine kritische Temperatur überschritten wird, wirkt das thermisch aktivierte Sicherungselement (130+140, 230+240) so, dass es dem Verschlusselement (160, 285) gestattet, sich in einen dichtenden Eingriff mit dem Ventilsitz zu bewegen.

2. Sicherheitsventil nach Anspruch 1, wobei das Verschlusselement (160, 285) ein Material umfasst, das von einem Magneten angezogen wird und durch einen Magneten, der an oder angrenzend an den Ventilsitz angeordnet ist, in Richtung des Ventilsitzes gezogen wird.

3. Sicherheitsventil nach Anspruch 2, wobei der Magnet (150, 250) den Ventilsitz bildet.

4. Sicherheitsventil nach einem der vorhergehenden Ansprüche, wobei das Ventil ferner einen Einlass (110, 210), der dem Verschlusselement vorgelagert ist, und einem Auslass (120, 220), der dem Ventilsitz nachgelagert ist, umfasst und wobei die Fluidströmungsrichtung mit der erforderlichen Bewegungsrichtung des Verschlusselements (160, 285) in Richtung des Ventilsitzes übereinstimmt.

5. Sicherheitsventil nach einem der vorhergehenden Ansprüche, wobei die Anziehung, die das Verschlusselement (160, 285) in Richtung des Ventilsitzes vorgespannt, ausreichend ist, um das Verschlusselement (160, 285) in einen dichten Eingriff mit dem Ventilsitz zu bringen, und zwar in Abwesenheit von jeglicher Fluidströmung durch das Ventil.

6. Sicherheitsventil nach einem der vorhergehenden Ansprüche, wobei mindestens ein Teil (130, 230) des thermisch aktivierten Sicherungselements über der kritischen Temperatur weich wird oder schmilzt.

7. Sicherheitsventil nach einem der vorhergehenden Ansprüche, wobei die kritische Temperatur, bei der der mindestens eine Teil (130, 230) des thermisch aktivierten Sicherungselements aktiviert wird, nicht mehr als 200 °C beträgt.

8. Sicherheitsventil nach einem der vorhergehenden Ansprüche, wobei mindestens ein Teil des Ventilkörpers (100, 200) und das thermisch aktivierte Sicherungselement (130+140, 230+240) aus einem einzigen Stück gebildet sind.

9. Sicherheitsventil nach Anspruch 8, wobei der mindestens eine Teil des Ventilkörpers (100, 200) und das thermisch aktivierte Sicherungselement, das einen thermisch aktivierten Sicherungsteil (130, 230) und einen Halter (140, 240) umfasst, alle aus einem einzigen Stück eines Thermoplasten gebildet sind.

10. Sicherheitsventil nach Anspruch 9, wobei der Thermoplast Polyamid ist.

11. Sicherheitsventil nach einem der vorhergehenden Ansprüche, wobei mindestens ein Teil der Innenoberfläche des Ventilkörpers (100, 200) eine Vielzahl von Erhöhungen (195) und Kanälen umfasst, die so angeordnet sind, dass sie die korrekte Ausrichtung des Verschlusselements (160, 285) in dem Ventilkörper sicherstellen und den Durchgang von Fluid aus dem Einlass (110, 210) um das Verschlusselement (160, 285) herum gestatten.

12. Feuerbrecher, umfassend ein Sicherheitsventil nach einem der vorhergehenden Ansprüche, wobei der Ventilkörper (100, 200) aus einem Material hergestellt ist, das bei der kritischen Temperatur, bei der das thermisch aktivierte Sicherungselement (130+140, 230+240) aktiviert wird, nicht brennt.

13. Feuerbrecher nach Anspruch 12, wobei das Material Polyamid ist.

14. Sauerstoffliefersystem (350), umfassend:
eine Quelle für Sauerstoff (310);
ein Sauerstoffliefermittel (330); und
einen Strömungsweg (320) für Sauerstoff, der die Quelle für Sauerstoff (310) mit dem Sauerstoffliefermittel (330) verbindet;
wobei der Strömungsweg (320) für Sauerstoff mindestens ein Sicherheitsventil (300) nach einem der Ansprüche 1-11 und/oder mindestens einen Feuerbrecher (300) nach einem der Ansprüche 12 und 13 umfasst, wobei das mindestens eine Ventil (300) so in dem Strömungsweg (320) angeordnet ist, dass die Strömung von Sauerstoff aus des Quelle für Sauerstoff (310) zu dem Sauerstoffliefermittel (330) geschlossen wird, wenn das thermisch aktivierte Sicherungselement (130+140, 230+240) aktiviert wird, und/oder der mindestens eine Feuerbrecher (300) so in dem Strömungsweg (320) angeordnet ist, dass dem weiteren Fortschritt eines Feuers entlang des Strömungswegs (320) durch das Vorhandensein des Feuerbrechers (300) Einhalt geboten wird.

## Revendications

1. Soupape de sûreté pour fermer, en réponse à une augmentation de température, un chemin d'écoulement d'un fluide, ledit fluide étant combustible ou capable de supporter la combustion, la soupape de sécurité comprenant :
un corps de soupape (100, 200) et dans le corps de soupape (100, 200) :
un élément de fermeture (160, 285) ;
un logement de soupape ; et
un élément de fusible thermiquement activé (130+140, 230+240) ; tel que l'élément de fermeture (160, 285) est incliné vers le logement de soupape par une force magnétique, et l'élément de fusible thermiquement activé (130+140, 230+240) agit en fonctionnement normal pour maintenir l'élément de fermeture (160, 285) espacé du logement de soupape, mais, lorsqu'une température critique est dépassée, l'élément de fusible thermiquement activé (130+140, 230+240) agit de façon à permettre à l'élément de fermeture (160, 285) de se déplacer en prise étanche avec le logement de soupape.

2. Soupape de sûreté selon la revendication 1, dans laquelle l'élément de fermeture (160, 285) comprend un matériau attiré vers un aimant et il est attiré vers le logement de soupape par un aimant placé au niveau ou près du logement de soupape.

3. Soupape de sûreté selon la revendication 2, dans laquelle l'aimant (150, 250) forme le logement de soupape.

4. Soupape de sûreté selon l'une quelconque des revendications précédentes, dans laquelle la soupape comprend en outre une entrée (110, 210) en amont de l'élément de fermeture et une sortie (120, 220) en aval du logement de soupape, et dans laquelle la direction du chemin d'écoulement coïncide avec la direction requise de mouvement de l'élément de fermeture (160, 285) vers le logement de soupape.

5. Soupape de sûreté selon l'une quelconque des revendications précédentes, dans laquelle l'attraction inclinant l'élément de fermeture (160, 285) vers le logement de soupape est suffisante pour amener l'élément de fermeture (160, 285) en prise étanche avec le logement de soupape, en l'absence d'un quelconque écoulement de fluide à travers la soupape.

6. Soupape de sûreté selon l'une quelconque des revendications précédentes, dans laquelle au moins une partie (130, 230) de l'élément fusible thermiquement activé ramollit ou fond au-dessus de la température critique.

7. Soupape de sûreté selon l'une quelconque des revendications précédentes, dans lequel la température critique à laquelle ladite au moins une partie (130, 230) de l'élément fusible thermiquement activé est activée ne dépasse pas 200°C.

8. Soupape de sûreté selon l'une quelconque des revendications précédentes, dans laquelle au moins une partie du corps de soupape (100, 200) et l'élément fusible thermiquement activé (130+140, 230+240) sont formés en une pièce unique.

9. Soupape de sûreté selon la revendication 8, dans laquelle ladite au moins une partie du corps de soupape (100, 200) et l'élément fusible thermiquement activé comprenant une partie fusible thermiquement activée (130, 230) et un élément de retenue (140, 240) sont tous formés en une seule pièce à partir de thermoplastique.

10. Soupape de sûreté selon la revendication 9, dans laquelle le thermoplastique est un polyamide.

11. Soupape de sûreté selon l'une quelconque des revendications précédentes, dans laquelle au moins une partie de la surface interne du corps de soupape (100, 200) comprend une pluralité d'arêtes (195) et des canaux disposés de façon à assurer l'alignement correct de l'élément de fermeture (160, 285) dans le corps de soupape et à permettre le passage de fluide depuis l'entrée (110, 210) autour de l'élément de fermeture (160, 285).

12. Système coupe-feu comprenant une soupape de sûreté selon l'une quelconque des revendications précédentes, dans lequel le corps de soupape (100, 200) est réalisé à partir d'un matériau qui ne brûle pas à la température critique à laquelle l'élément fusible thermiquement activé (130+140, 230+240) est activé.

13. Système coupe-feu selon la revendication 12, dans lequel le matériau est un polyamide.

14. Système de distribution d'oxygène (350) comprenant :
une source d'oxygène (310) ;
des moyens de distribution d'oxygène (330) ; et
un chemin d'écoulement (320) pour raccorder la source d'oxygène (310) aux moyens de distribution d'oxygène (330) ; dans lequel le chemin d'écoulement (320) pour l'oxygène comprend au moins une soupape de sûreté (300) selon l'une quelconque des revendications 1-11 et/ou au moins un système coupe-feu (300) selon l'une quelconque des revendications 12 et 13, ladite au moins une vanne (300) étant disposée dans le chemin d'écoulement (320), de sorte que le flux d'oxygène, de la source d'oxygène (310) jusqu'aux moyens de distribution d'oxygène (330), soit fermé quand l'élément fusible thermiquement actif (130+140, 230+240) est activé, et/ou ledit au moins un système coupe-feu (300) étant disposé dans le chemin d'écoulement (320), de sorte que la progression ultérieure d'un feu le long du chemin d'écoulement (320) soit arrêtée par la présence du système coupe-feu (300).
